(11) **EP 2 728 082 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
*E04C 1/41* *(2006.01)*    *E04B 1/84* *(2006.01)*

(21) Anmeldenummer: **13190451.8**

(22) Anmeldetag: **28.10.2013**

(54) **Mehrschichtziegel und Verfahren zu dessen Herstellung**

Multi-layer brick and method for its production

Brique multicouche et son procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2012 DE 102012110369**

(43) Veröffentlichungstag der Anmeldung:
**07.05.2014 Patentblatt 2014/19**

(73) Patentinhaber: **Graul, Denise**
**84427 St. Wolfgang (DE)**

(72) Erfinder: **Graul, Denise**
**84427 St. Wolfgang (DE)**

(74) Vertreter: **Gustorf, Gerhard**
**Bachstraße 6a**
**84036 Landshut (DE)**

(56) Entgegenhaltungen:
**EP-A1- 0 580 096      EP-A2- 2 000 607**
**AT-B- 339 559      DE-A1- 2 737 012**
**DE-A1- 3 012 071      DE-A1- 3 245 652**
**DE-A1- 3 302 728      DE-A1- 4 214 825**
**DE-A1-102006 019 796      DE-U1-202004 019 685**
**DE-U1-212004 000 002**

EP 2 728 082 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Mehrschichtziegel zur Errichtung eines zweischaligen Mauerwerks nach dem Oberbegriff des Patentanspruchs 1 sowie ein Verfahren zur Herstellung eines solchen Ziegels.

Mit einer umfassenden Veränderung und Weiterentwicklung des Baustoffs Ziegel in den letzten Jahren hat sich immer mehr ein Konflikt zwischen den Anforderungen an die Wärmedämmung einerseits und die Schalldämmung andererseits ergeben, da eine Verringerung des Ziegelrohgewichtes mit verminderten Schallschutzeigenschaften verbunden ist, weshalb sich die Schallschutzeigenschaften mit einer herkömmlichen Optimierungstechnik nicht wesentlich verbessern lassen. Unter einer herkömmlichen Optimierung im Sinne des Standes der Technik wird bei einer gegebenen Abmessung eines Ziegels die Variation des Lochanteils, die Lochgeometrie, die Anzahl der Kammern und die Füllung der Hohlräume mit schalldämmendem Material verstanden. Es ist hierbei evident, dass eine Erhöhung des Lochanteils zur Verbesserung der Schallschutzeigenschaften mit reduzierten Wärmedämmeigenschaften einhergeht und umgekehrt.

Gegenstand des deutschen Gebrauchsmusters DE 21 2004 000 002 U1 ist ein Bausteinverbund, der gemäß Aufgabenstellung gute Eigenschaften hinsichtlich der Schall- und der Wärmedämmung aufweisen soll. In einer Ausführungsvariante besteht der zweischalige Bausteinverbund aus miteinander verklebten Hohlkammerziegeln, wobei der Klebespalt eine konstante Breite von max. 1 mm haben soll. Die Hohlkammern der Ziegel sind mit einem Dämmmaterial gefüllt. Zwischen den beiden Schalen des Bausteinverbundes ist eine isolierende Zwischenschicht aus Polyurethanschaum angebracht, die mit der jeweils angrenzenden Schale über eine Verbindungsmaterialschicht verklebt ist. Durch diesen Aufbau wird keine akustische Entkoppelung der beiden Schalen erreicht.

In DE 10 2006 019 796 A1 ist ein ähnliches Mauelwerksandwichelement beschrieben und dargestellt, das aus einem innenseitigen Mauerelement in Form eines Hochlochziegels und aus einem außenseitigen Mauerelement geringerer Dicke mit einer schalldämmenden Hohlkammerstruktur besteht, wobei beide über eine Zwischenschicht aus Polyurethanschaumstoff fest verbunden sind, so dass keine akustische Entkoppelung der beiden Mauerelemente erreicht wird. Das außenseitige Mauerelement wird zur Herstellung durch Aufsägen eines Ziegels in Längsrichtung hergestellt. Um bei der Herstellung des Sandwichelementes ein Herausquellen des noch nicht vollständig abgebundenen PU-Schaums zu vermeiden, sind entlang der Anschlussflächen zum benachbarten Sandwichelement plattenartige Begrenzungsmittel an die beiden Mauerelemente gelegt, die den Hohlraum zwischen diesen weitgehend abschließen und von der ausgehärteten Schaumstoffschicht leicht abgelöst werden können.

Ein zweischaliger Mauerziegel vergleichbarer Ausbildung ist aus AT 339 559 B bekannt.

Aus dem Gebrauchsmuster DE 92 17 630 U1 ist ein zweischaliges Mauerwerk in Wärmedämm-Bauweise bekannt, das aus einem Hintermauerwerk mit Hochlochziegeln und aus einem Vormauerwerk aus wärmedämmenden, porosierten Hochlochziegeln geringerer Breite besteht. Zwischen beiden ist eine wärmedämmende Schicht angebracht.

Gegenstand des Gebrauchsmusters DE 20 2004 019 685 U1 ist ein Akustikstein, der in seiner einfachsten Form aus einem formgebenden Steinelement aus Porenbeton und einem darauf aufgebrachten Schalltrennelement aus Polystyrol besteht. Dieser eignet sich zur Errichtung eines einschaligen Mauerwerks mit vertikaler Schalldämmung, etwa zwischen Boden und Decke eines Gebäudes.

Der Erfindung liegt die Aufgabe zugrunde, einen monolitischen Mehrschichtziegel zur Errichtung eines zweischaligen Mauerwerks, insbesondere einer Wohnungstrennwand zur Verfügung zu stellen, der bei mindestens gleichbleibenden oder besseren Wärmedämmwerten wesentlich verbesserte Eigenschaften im Schallschutzbereich aufweist und eine flexible Entkopplung innerhalb des Ziegels zwischen wärmedämmender Tragschale und schalldämmender Vorsatzschale erlaubt.

Die Lösung dieser Aufgabe ergibt sich aus den Merkmalen des Anspruchs 1. Vorteilhafte Weiterbildungen sind Gegenstand der Unteransprüche.

Ferner soll ein Verfahren zur Herstellung eines monolithischen Mehrschichtziegels angegeben werden, das gegenüber dem eingangs erläuterten Stand der Technik gemäß DE 10 2006 019 796 A1 erheblich vereinfacht ist. Die Lösung dieser Aufgabe ergibt sich aus den Merkmalen des Anspruchs 8.

Mit der erfindungsgemäßen Ausgestaltung des aus einem Stück bestehenden Mehrschichtziegels ist eindeutig definiert, welche Aufgaben die Vorsatzschale und die Tragschale übernehmen, die beide über die weichfedernden Verbindungsmittel akustisch voneinander entkoppelt sind. Durch diese Entkopplung der beiden Schalen werden wesentlich verbesserte Eigenschaften im Schallschutzbereich erzielt, ohne dass dadurch die Wärmedämmeigenschaften der Tragschale beeinflusst werden.

Da gemäß der Erfindung die beiden Schalen durch das weichfedernde Verbindungsmittel, vorzugsweise weichelastischer PUR-Schaum mit einem dynamischen E-Modul zwischen 0,1 und 6 N/mm$^2$, akustisch voneinander entkoppelt sind, wird der Schalldruck, der auf eine Schale einwirkt, nicht auf die andere Schale übertragen. Als entkoppelndes Verbindungsmittel eignet sich vorwiegend PU-Schaum mit einer Zugfestigkeit zwischen 0,4 und 3 N/mm$^2$, der als Verbindungsschicht flächig zwischen den beiden Schalen aufgebracht sein kann. Alternativ wird allerdings eine Lösung bevorzugt, bei der das Verbindungsmittel in Form von Verbindungselementen punktuell zwischen den beiden Schalen eingesetzt wird, um diese formschlüssig oder kraftschlüssig so miteinander zu verbinden, dass unter Freilassung eines Abstandes eine Entkopplung bewirkt wird.

Entsprechend ihrer Funktion in dem "monolithischen" Mehrschichtziegel, der als fertiger Verbundbaustein vermauert werden kann, ist die biegesteife Tragschale schwerer als die Vorsatzschale, die überwiegend zur Schalldämmung dient. Mit anderen Worten hat die Tragschale eine größere Flächenmasse $m_F$ als die Vorsatzschale, wobei gilt:

$$m_F = \rho_S \times d_W \times L_A$$

mit

$\rho_S$ = Scherbenrohdichte, i. a. zwischen 1,0 und 1,8 kg/dm³,
$d_W$ = Wanddicke
$L_A$ = Lochanteil in Prozent

Um für die Tragschale bzw. die Vorsatzschale die optimale Flächenmasse zu wählen, müssen daher die drei Koeffizienten entsprechend variiert werden, d. h. für die Tragschale eine hohe Scherbenrohdichte von etwa 1,4 kg/dm³, eine große Wanddicke von 14 cm oder mehr und einen Lochanteil von max. 40 %, der geringer ist als bei der Vorsatzschale. Da in der Praxis beide Schalen aus demselben Material hergestellt werden und damit gleiche Scherbenrohdichte haben, müssen die beiden anderen Parameter entsprechend gewählt werden, um die optimalen Werte für die Flächenmasse zu erhalten:

Tragschale: $m_F \geq 120\,kg/m^2$
Vorsatzschale: $m_F \leq 100\,kg/m^2$

Die Erfindung ist nachstehend an Ausführungsbeispielen erläutert, die in der Zeichnung dargestellt sind. Darin zeigen:

Figur 1 einen horizontal Schnitt durch einen Mehrschichtziegel für ein zweischaliges Mauerwerk gemäß der Erfindung,
Figur 2 einen Ausschnitt einer Verbindungsstelle zwischen zwei gemäß Figur 1 ausgebildeten Schalen,
Figur 3 eine Variante der Figuren 1 und 2,
Figur 4 eine schematische Darstellung der Ausführungsform der Figur 3,
Figur 5 im Ausschnitt einen schematischen Horizontalschnitt durch einen zweischaligen Ziegel mit punktuell angebrachten, kraftschlüssigen Verbindungselementen,
Figur 6 eine Variante der Figur 5 mit formschlüssigen Verbindungselementen,
Figur 7 eine Variante der Figur 6,
Figur 8 eine andere Ausführungsform eines formschlüssigen Verbindungselementes und
Figur 9 eine Ausschnittdarstellung eines zweischaligen Ziegels mit einem ähnlich der Figuren 6 und 7 ausgebildeten Verbindungselement zur Erläuterung eines möglichen Herstellungsverfahrens gemäß der Erfindung.

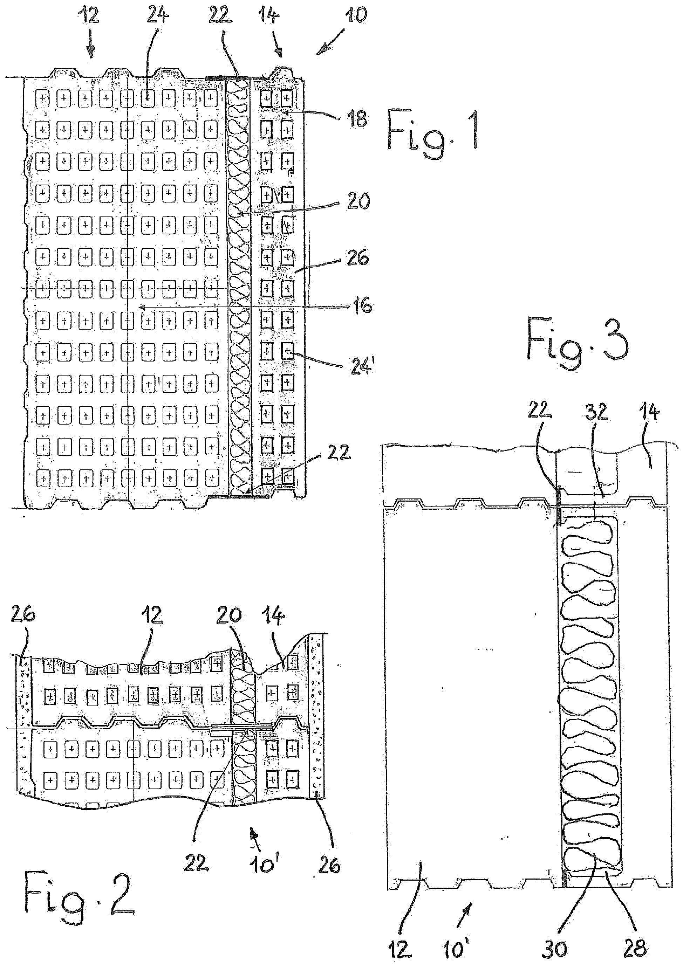

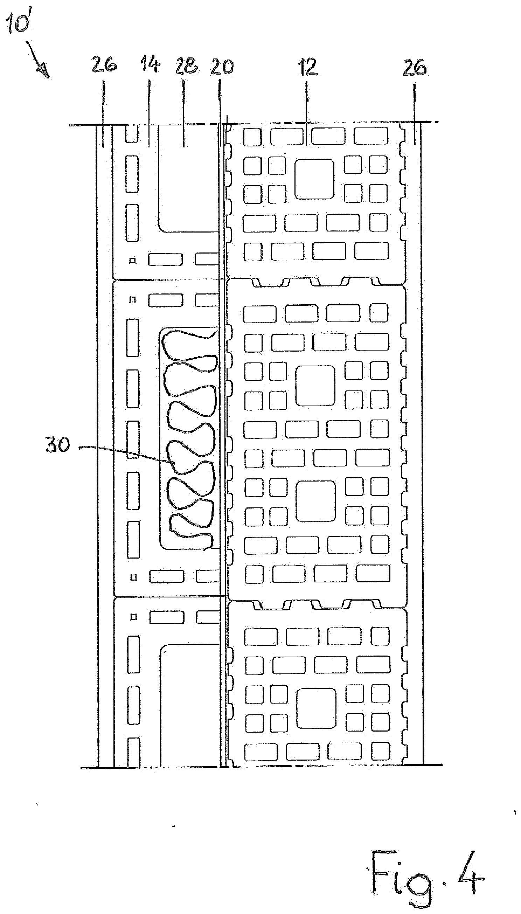

Die Figuren 1 und 2 zeigen im Horizontalschnitt die schematische Darstellung eines zweischaligen Ziegels 10 in einem ebensolchen Mauerwerk 10' ähnlich der Figur 4. Der Mehrschichtziegel 10 gemäß der Erfindung besteht aus einer Tragschale 12 und einer Vorsatzschale 14. Beide sind als Hohlkammerziegelelemente 16 bzw. 18 ausgebildet, die durch ein weichfederndes Verbindungsmittel voneinander entkoppelt sind. Als Verbindungsmittel eignet sich ein PU-Schaumstoff mit einem dynamischen Elastizitätsmodul zwischen 0,1 und 6,0 N/mm² und einer Zugfestigkeit zwischen 0,4 und 3,0 N/mm², der hier als Verbindungsschicht 20 flächig zwischen den beiden Schalen 12, 14 aufgetragen ist.

Bei der Herstellung des in Figur 1 gezeigten, zweischaligen Monolithziegels 10 werden die beiden Hohlkammerziegelelemente 16 und 18 gegen die als Matte ausgebildete Verbindungsschicht 20 von etwa 25 mm Dicke gepresst, wodurch diese auf eine Stärke von etwa 20 mm gestaucht wird. Bei diesem Anpressvorgang wird an den beiden freiliegenden Enden der Verbindungsschicht 20 jeweils ein elastisches, zugfestes Folienband 22 mittels eines hochfesten Heißkunststoffs angeklebt, wodurch eine zugfeste Verbindung der drei Lagen des monolithischen Ziegels 10 erreicht wird. Für das Folienband 22 wird vorzugsweise eine nur etwa 0,5 mm starke, genoppte Neoprenfolie verwendet, die nach der Verklebung über die gesamte Ziegelhöhe eine wirksame Verbindung herstellt, die auf Zug-, Druck- und Scherkraft belastbar ist.

Die auf diese Weise gestauchte Verbindungsschicht 20 aus Schaumstoff gewährleistet eine elastische Entkoppelung zwischen der wärmedämmenden Tragschale 12 des Ziegels 10 und der schalldämmenden Vorsatzschale 14, die mit etwa 60 % einen größeren Lochanteil als die Tragschale 12 hat.

Versuche haben ergeben, dass mit diesem monolithischen Ziegel 10 Schalldämm-Maße in der Größenordnung von 61 bis 63 dB erzielt werden können. Die Wärmedämmeigenschaften der Tragschale 12 bleiben aufgrund des geringeren Lochanteils unbeeinträchtigt, wobei die Hochlöcher 24 in bekannter Weise mit einem wärmedämmenden Material gefüllt sein können. Die Hochlöcher 24' der schalldämmenden Vorsatzschale 14 sind hingegen mit Luft gefüllt.

Figur 2 zeigt einen Ausschnitt aus dem Mauerwerk 10' mit zwei monolithischen Ziegeln 10 gemäß Figur 1, die knirsch verlegt sind. An der Innenseite und der Außenseite ist jeweils eine Putzschicht 26 angebracht.

Aufgrund der Verklebung durch das Folienband 22 im Bereich der beiden freiliegenden Enden der Verbindungsschicht 20 ist es nicht erforderlich, zwischen dieser und der Tragschale 12 bzw. der Vorsatzschale 14 eine Kleberschicht vorzusehen.

In der Variante der Figur 3 ist dargestellt, dass die Vorsatzschale 14 eine U-förmige, zur gegenüberliegenden Tragschale 12 offene Kammer 28 hat, die mit einem schallschluckenden Werkstoff 30, beispielsweise Mineralwolle gefüllt ist. Die beiden seitlichen U-Schenkel 32 bilden die Begrenzungswände der Kammer 28 und sind mit ihren Enden über eine elastische Verbindungsschicht 22 miteinander verbunden, so dass sich auch bei dieser Ausführung eine elastische Entkoppelung zwischen der schalldämmenden Vorsatzschale 14 und der wärmedämmenden Tragschale 12 ergibt.

Das Beispiel der Figur 4 zeigt eine ähnlich der Figur 2 ausgebildete Ausführungsform für ein zweischaliges Mauerwerk 10', bestehend aus Mehrschichtziegeln 10 mit einer wärmedämmenden Tragschale 12 und einer wie in Figur 3 ausgebildeten, schall dämmenden Vorsatzschale 14, auf deren Außenseiten jeweils eine Putzschicht 26 aufgebracht ist. Die Kammern 28 der aus U-förmigen Hohlkammerziegelelementen 16 bestehenden Vorsatzschalen 14 sind auch hier mit einem schallschluckendem Material 30 verfüllt. Die freien Enden der Schenkel 32 der U-förmigen Vorsatzschalen 14 sind jeweils über eine Verbindungsschicht 20 in Form von jeweils einem Elastomerband mit der angrenzenden Tragschale 16 verbunden.

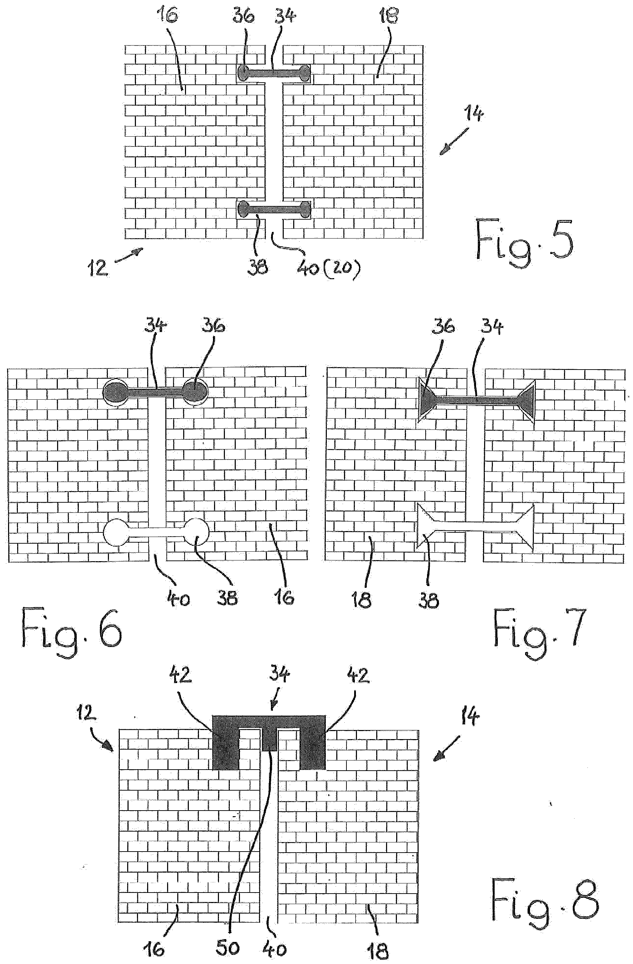

Die Figuren 5 bis 8 zeigen mögliche Ausgestaltungen für punktuell angebrachte elastische Verbindungselemente 34 zwischen einer wärmedämmenden Tragschale 12 und einer ebenfalls nur schematisch angedeuteten, schalldämmenden Vorsatzschale 14. Die beiden in Figur 5 angedeuteten, kraftschlüssigen Verbindungselemente 34 bestehen aus einem elastischen Werkstoff, beispielsweise PU-Schaumstoff, dessen erweiterte Köpfe 36 in jeweils eine über die gesamte Höhe des Ziegels 10 durchgehende Aussparung 38 der jeweiligen Schale 12 bzw. 14 eingreifen und in dieser Aussparung 38 beispielsweise durch Kleben fixiert sind. Alternativ können die Köpfe 36 aus einem viskoseelastischen Kunststoff bestehen, der in die Aussparung 38 gedrückt wird und sich in dieser ausdehnt, ohne dass ein Verkleben erforderlich ist. Zwischen der Tragschale 12 und der Vorsatzschale 14 muss zur Entkoppelung ein Abstand 40 freibleiben.

In den Beispielen der Figuren 6 und 7 ist aufgrund der hinterschnittenen Formgebung der Aussparungen 38 nach dem Einsetzen der Verbindungselemente 34 eine formschlüssige Verbindung zwischen der Tragschale 12 und der Vorsatzschale 14 hergestellt.

Die Verbindungselemente 34 der Figuren 6 und 7 können ohne Verwendung eines Klebers in die hinterschnittene Aussparung 38 eingeschoben werden. Als Material für die Verbindungselemente 34 ist nicht nur ein flexibles Material denkbar, sondern auch eine Kombination aus einer Metallstange und einer Kunststoffbeschichtung.

In der Variante der Figur 8 erfolgt die elastisch entkoppelte Verbindung zwischen Tragschale 12 und Vorsatzschale 14 durch ein Verbindungselement 34, das im Schnitt die Form eines E hat, dessen beide Außenschenkel 42 in jeweils eine stirnseitige Aussparung 38 der jeweiligen Schale 12, 14 eingesetzt sind, während der Mittelschenkel 50 den Abstand 40 zwischen Tragschale 12 und Vorsatzschale 14 hält.

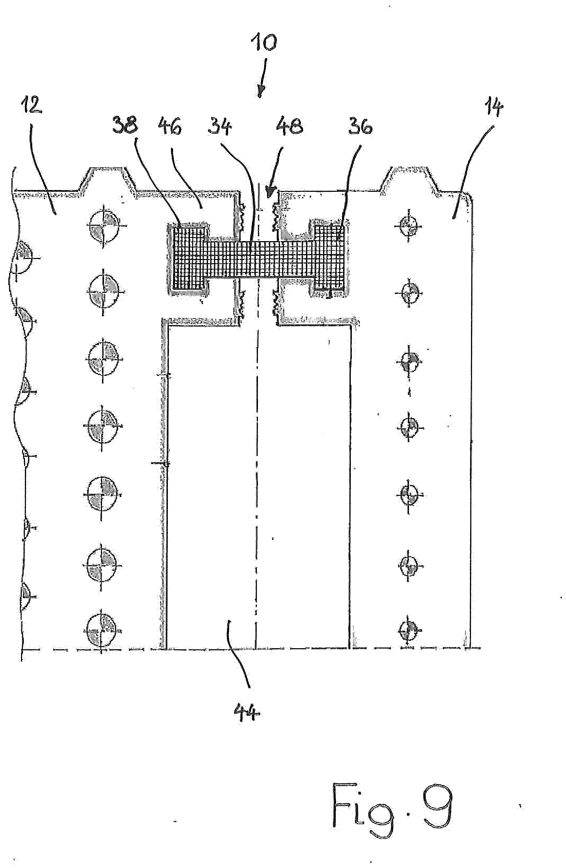

Anhand der Figur 9 wird nachstehend ein mögliches, gemäß der Erfindung vorgesehenes Herstellungsverfahren für einen monolithischen Ziegel 10 erläutert. Für diesen wird zunächst ein Hochlochziegel gebrannt, dessen in Figur 9 linke Seite als eine dicke Wand zur Herstellung der wärmedämmenden Tragschale 12 mit geringem Lochanteil ausgebildet ist, während die in Figur 9 rechte Wand dünner ist und für die schalldämmende Vorsatzschale 14 mit größerem Lochanteil vorgesehen ist. Zwischen beiden befindet sich eine über die Ziegelhöhe durchgehende Hohlkammer 44, die aufgrund der unterschiedlichen Wanddicken der Tragschale 12 und der Vorsatzschale 14 exzentrisch angeordnet ist.

Ähnlich wie im Beispiel der Figuren 6 und 7 sind die Schalen 12 und 14 über ein elastisches Verbindungselement 34 formschlüssig miteinander verbunden, wobei die beiden Köpfe 36 des Verbindungselementes 34 in eine jeweils hinterschnittene Aussparung 38 der die beiden Wände miteinander verbindenen Schenkel 46 von oben nach unten durchgehend eingeschoben werden.

Solange die beiden Schenkel 46 des Hochlochziegels noch miteinander verbunden sind, wird in die Hohlkammer 44 ein elastisches Material 30 eingegeben, das durch die Produktion von Gasen wie beispielsweise $CO_2$ beim Aushärten sein Volumen vergrößert und dabei an einer vorgesehenen Sollbruchstelle 48 die beiden Schenkel 46 sprengt. Damit wird in einfacher Weise ein zweischaliger Monolithziegel 10 gemäß der Erfindung hergestellt, dessen schallschluckendes Material 30 durch die beiden vertikal durchgehenden Verbindungselemente 34 auf beiden Seiten innerhalb der Hohlkammer 44 eingeschlossen ist.

**Patentansprüche**

1. Mehrschichtziegel zur Errichtung eines zweischaligen Mauerwerks, insbesondere einer Wohnungstrennwand, mit einer tragenden Mauer und einer Vormauer, die beide aus Hohlkammerziegeln bestehen und flexibel miteinander verbunden sind, wobei in jedem Mehrschichtziegel (10) eine Tragschale (12) und eine Vorsatzschale (14), die beide aus Hohlkammerziegelelementen (16, 18) bestehen, über ein weichfederndes Verbindungsmittel akustisch voneinander entkoppelt sind, und wobei das Hohlkammerziegelelement (18) der Vorsatzschale (14) eine geringere Flächenmasse als das Hohlkammerziegelelement (16) der Tragschale (12) und das Verbindungsmittel einen dynamischen E-Modul zwischen 0,1 und 6 N/mm$^2$ hat, **dadurch gekennzeichnet, dass**

(i) das Verbindungsmittel zwischen der Vorsatzschale (14) und der Tragschale (12) aus einer flächig aufgebrachten Verbindungsschicht (20) besteht, wobei die Tragschale (12) und die Vorsatzschale (14) an den freiliegenden Enden der Verbindungsschicht (20) durch jeweils ein elastisches Folienband (22) mittels eines hochfesten Heißkunststoffes miteinander verklebt sind, oder

(ii) das Verbindungsmittel zwischen der Vorsatzschale (14) und der Tragschale (12) aus punktuell angebrachten, kraftschlüssigen oder formschlüssigen Verbindungselementen (34) besteht.

**2.** Mehrschichtziegel nach Anspruch 1 , **dadurch gekennzeichnet, dass** das Verbindungsmittel eine Zugfestigkeit zwischen 0,4 und 3 N/mm$^2$ hat.

**3.** Mehrschichtziegel nach Anspruch 1 oder 2, **dadurch gekennzeichnet, dass** das Verbindungsmittel aus weichelastischem PU-Schaum besteht.

**4.** Mehrschichtziegel nach einem der vorhergehenden Ansprüche, **dadurch gekennzeichnet, dass** die Verbindungselemente (34) so ausgebildet sind, dass sie einen Abstand (40) zwischen der Vorsatzschale (14) und der Tragschale (12) freilassen.

**5.** Mehrschichtziegel nach einem der vorhergehenden Ansprüche, **dadurch gekennzeichnet, dass** die Vorsatzschale (14) eine Flächenmasse $m_F$ mit $0 < m_F < 100$ kg/m$^2$ und die Tragschale (12) eine Flächenmasse $m_F$ von mindestens 120 kg/m$^2$ hat.

**6.** Mehrschichtziegel nach einem der vorhergehenden Ansprüche, **dadurch gekennzeichnet, dass** die Vorsatzschale (14) und/oder die Tragschale (12) eine zur gegenüberliegenden Schale offene Kammer (28) hat, die mit schallschluckenden Material (30) gefüllt ist.

**7.** Mehrschichtziegel nach Anspruch 6, **dadurch gekennzeichnet, dass** das schallschluckende Material (30) aus Mineralwolle besteht.

**8.** Verfahren zur Herstellung eines Mehrschichtziegels nach einem der vorhergehenden Ansprüche, **dadurch gekennzeichnet, dass** ein Hochlochziegel mit einer exzentrischen Hohlkammer (44) gebrannt wird, die auf einer Seite von einer die Tragschale (12) bildenden, dicken Wand des Hochlochziegels und auf der anderen Seite von einer die Vorsatzschale (14) bildenden, dünneren Wand des Hochlochziegels begrenzt wird, wobei in die beide Wände verbindende Schenkel (46) vorzugsweise hinterschnittene Aussparungen (38) eingearbeitet sind, in welche über die gesamte Höhe des Mehrschichtziegels (10) elastische Verbindungselemente (34) formschlüssig eingesetzt werden, worauf das elastische Material (30) in die Hohlkammer (44) eingebracht wird, das beim anschließendem Aushärten sein Volumen vergrößert und dabei durch sein Aufblähen die beiden Schenkel (46) an Sollbruchstellen (48) sprengt.

**Claims**

**1.** Multi-layer brick, adapted to erect a double-wall masonry, particularly for a domestic partition wall, said masonry comprising a structural wall and a facing wall both being flexibly interconnected and made up of cellular bricks, in each of said multi-layer brick (10) a structural shell (12) and a facing shell (14), both consisting of cellular brick elements (16, 18), are acoustically decoupled by means of a softly resilient joining member, said cellular brick element (18) of the facing shell (14) having a gramms per square metre index which is lower than that of the structural cell (12), wherein the joining member has a dynamic elasticity modulus between 0,1 and 6N/mm$^2$, **characterized in that**

(i) the joining member between the facing shell (14) and the structural shell (12) is made up of a surface covering joining layer (20), wherein the structural shell (12) and the facing shell (14) are glued to each other in the zone of the free ends of the joining layer (20) through an elastic foil strip (22) by means of a hot melting resin, or that

(ii) the joining member between the facing shell (14) and the structural shell (12) is made up of localized postive or non postive joining elements (34).

**2.** Multi-layer brick according to claim 1 wherein the joining member has a tensile strength between 0,4 and 3N/mm$^2$.

**3.** Multi-layer brick according to claim 1 or 2, wherein the joining member is made up of a softly resilient polyurethane foam.

**4.** Multi-layer brick according to any of the preceding claims, wherein the joining elements (34) are made such that they ensure a distance (40) between the facing shell (14) and the structural shell (12).

**5.** Multi-layer brick according to any of the preceding claims, wherein the gramms per square meter index $m_F$ of the facing shell (14) is $O < m_F < 100$ kg/m$^2$

and that of the structural shell (12) is at least 120 kg/m$^2$.

6. Multi-layer brick according to any of the preceding claims, wherein the facing shell (14) and/or the structural shell (12) are provided with a cavity (28) which is open on the side facing the opposite shell and which is filled with a sound absorbing material (30).

7. Multi-layer brick according to claim 6, wherein the sound absorbing material consists of mineral cotton.

8. Method for the production of a multi-layer brick according to any of the preceding claims, **characterized in** burning a cellular brick having an eccentric cavity (44) which is limited on one side by a thick wall forming the structural shell (12) of said brick and on the opposite side by a thinner wall forming the facing shell (14) of said brick, wherein both walls are interconnected by legs (46) provided with preferably undercut recesses (38) into which elastic joining elements (34) are positively inserted that extend over the whole hight of the cellular brick (10), after which the cavity (44) is filled with an elastic material (30) which by its subsequent hardening process is enlarging its volume such that both legs (46) are bursting in predetermined breaking areas.

## Revendications

1. Brique multicouche apte à ériger un murage à double paroi, notamment une cloison d'habitation et comprenant une paroi portante et une paroi de parement, les deux consistant en des briques à chambres creuses et flexiblement reliées les unes aux autres, chaque brique multicouche (10) comprenant une coque portante (12) et une coque de parement (14), les deux consistant en des éléments de brique (16, 18) à chambres creuses qui sont acoustiquement découplées l'une de à l'autre par un moyens de liaison souples, 1' élément de brique (18) de la coque de parement (14) ayant un coefficient de grammage plus petit que celui-ci de la coque portante (12) et le module d'élasticité dynamique se situant entre 0,1 et 6 N/mm$^2$, **caractérisée par le fait que**

   (i) les moyens de liaison entre la coque de parement (14) et la coque portante (12) est constitués en une couche de raccordement (20) appliquée sur la surface, la coque portante (12) et la coque de parement (14) étant collées, sur les extrémitées libres de la couche de raccordement, par un ruban de film élastique (22) au moyen d'une matière plastique thermoadhésive à haute résistance, ou que
   (ii) les moyens de liaison entre la coque de parement (14) et la coque portante (12) consiste en éléments de raccordement (34) par adhérence ou par fermeture géométrique appliqués par points.

2. Brique multicouche selon la revendication 1 **caractérisée par le fait que** le moyen de liaison présente une résistance à la traction entre 0,4 et 3N/mm$^2$,

3. Brique multicouche selon la revendication 1, **caractérisée par le fait que** les moyens de liaison consistent en une mousse de polyuréthane souple.

4. Brique multicouche selon une des revendications précédentes **caractérisée par le fait que** les éléments de raccordement (34) sont formés de telle sorte qu'il y a une distance (40) entre la coque de parement (14) et la coque portante (12).

5. Brique multicouche selon une des revendications précédentes, **caractérisée par le fait que** la masse au mètre carré $m_F$ de la coque de parement est $O < m_F < 100$ kg/m$^2$ et celle de la coque portante est au moins 120 kg/m$^2$

6. Brique multicouche selon une des revendications précédentes, **caractérisée par le fait que** la coque de parement (14) et/ou la coque portante (12) sont munies d'évidements (28) ouverts vers la face de la coque opposée et remplis par une matière absorbant le son (30).

7. Brique multicouche selon la revendication 6, **caractérisée par le fait que** la matière absorbant le son (30) est une laine minérale.

8. Procédé de fabrication d'une brique multicouche selon une des revendications précédentes, **caractérisé par** le fait de cuire une brique perforée ayant une chambre excentrique creuse (44), limitée sur une face par une paroi épaisse formant la coque portante (12) de la brique tandis qu'elle est limitée sur la face opposée par une paroi mince formant la coque de parement (14), les deux parois étant munies d'ailes (46) pour les relier entre elles, dans les ailes (46) étant pratiqués des évidements à contre-dépouille (38) dans lesquels sont insérés des éléments de raccordemente élastique (34) de fermeture s'étendant sur la hauteur totale de la brique, pour ensuite remplir la chambre creuse (44) avec la matière élastique (30) laquelle par la suite durcit en augmentant son volume et fait ainsi éclater les deux ailes (46) dans leurs zones destinées à la rupture.

Fig. 1

Fig. 3

Fig. 2

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 212004000002 U1
- DE 102006019796 A1
- AT 339559 B
- DE 9217630 U1
- DE 202004019685 U1